# EUROPEAN PATENT SPECIFICATION

(11) **EP 1 237 705 B1**
(45) Date of publication and mention of the grant of the patent: **06.10.2004**
(21) Application number: 00976891.2
(22) Date of filing: 03.11.2000
(51) Int. Cl.: B29C 47/00

(54) **EXTRUSION DIE AND METHOD FOR PRODUCING A HOLLOW-STRAND FOAM**
EXTRUSIONSDÜSE UND -VERFAHREN ZUR HERSTELLUNG EINES HOHLSTRANGSCHAUMS
FILIERE ET PROCEDE D'EXTRUSION POUR LA FABRICATION D'UN STRANDFOAM CREUX

(30) Priority: 02.12.1999 US 168562 P
(43) Date of publication of application: 11.09.2002
(60) Divisional application: 04017802.2
(73) Proprietor: DOW GLOBAL TECHNOLOGIES INC., Midland, Michigan 48674 (US)
(72) Inventor: GRINSHPUN, Vyacheslav, D., Midland, MI 48642 (US); SCHALLER, Michael, E., Midland, MI 48640 (US); TUSIM, Martin, H., Midland, MI 48642 (US); BRUSH, Andrew, R., Midland, MI 48640 (US); PARK, Jonathan, D., Lake Jackson, TX 77566 (US)
(74) Representative: Burford, Anthony Frederick
(86) International application number: PCT/US2000/030341
(87) International publication number: WO 2001/039954

(56) References cited:
- GB-A- 1 034 120
- GB-A- 1 061 702
- US-A- 3 713 762
- US-A- 3 949 031
- US-A- 3 954 365
- US-A- 4 753 841

## Description

This invention relates to extrusion foaming dies for producing foam structures comprising a plurality of hollow, coalesced foam strands and to the preparation of such strands using the dies.

A variety of patent publications relate to foamed objects that comprise a plurality of coalesced, distinguishable, expanded (foamed) polymer strands (strand foams). Illustrative publications include US-A-3,573,152 (column 2, lines 19-35, column 2, line 67 through column 3, line 30, column 4, line 25 through column 5, line 19 and column 5, line 64 through column 6, line 46); US-A-4,801,484 (column 1, lines 12-21, column 2, line 55 through column 5, line 8, column 5, lines 16-50 and column 5, line 60 through column 6, line 6); US-A-4,824,720 (column 2, lines 57-68, column 3, line 57 through column 5, line 32 and column 5, lines 50-58); US-A-5,124,097 (column 3, line 34 through column 4, line 3, column 5, line 31 through column 6, line 11 and column 6, lines 36-54); US-A-5,110,841; US-A-5,109,029 and; EP-A-0 279,668; JP-A-60-015114-A; JP-A-53-1262 and JP-A-H6-263909.

GB-A-1034120 discloses extruding a foamable thermoplastic synthetic resin into a plurality of separate strands of heat-softened foamable synthetic resin under a pressure sufficient to prevent the resin foaming, coalescing the strands while still under pressure and extruding the resulting coalesced mass so as to expand it into foamed thermoplastic synthetic resin. The foamable thermoplastic synthetic resin composition may be extruded through a die having at its inlet end a plurality of separate passages communicating with a slit at the outlet end of the die, the pressure within the die being sufficient to prevent the resin foaming before it leaves the slit and the dimensions of the passages and of the slit being such that the streams of resin issuing from the passages fill the slit and coalesce whilst still in the unfoamed state.

GB-A-1061702 discloses an insulating material comprising a flexible hollow extruded foamed polyolefin resin sheet having a cross-section in the form of a network of interconnected foamed polyolefin resin elements and an overall thickness of 0.5 to 2 inches (1.25 to 5 cm). The density of the material is preferably between 1 and 2Ib/ft³ (16 to 32 kg/m³) overall, and the density of the foamed resin elements may be from 2 to 4Ib/ft³ (32 to 64 kg/m³). The hollow sheets may be produced by extruding a foamable composition through a die having at its outlet end a number of slits arranged in the form of a network of the desired pattern, each slit having communicating with it a plurality of separate channels at the inlet end of the die as described in GB-A-1034120.

US-A-4753841, US-A-4755408 & US-A-4952450 disclose the continuous preparation of cellular foam structures by direct extrusion welding. A foamable synthetic resin, preferably polyethylene, is extruded with propellant through a multiplicity of nozzles arranged side by side and/or one above the other and the extrudate allowed to freely foam in air to form foam tubes. Shortly after extrusion through the nozzle, the foamed members contact each other and are pressed one against the other, for example by suitably arranged pairs of rolls, and allowed to coalesce to form panels or blocks of cellular foamed structure.

In general terms, strand foam preparation includes extrusion of a foamable material, typically a thermoplastic polymer material, through a multi-orifice die plate to generate individual foamable strand elements. The strands expand and coalesce (e. g. proximate strands contact each other along at least a surface portion of their respective lengths while the strands retain sufficient surface tackiness to effect strand-to-strand adhesion) after emerging from the die plate, yet remain distinguishable following recovery of the strand foam. Typical strands have a circular cross-section where the die orifices or apertures are circular. Altering the orifice shape to a slot, a square or a special shape leads to a corresponding partial alteration in strand cross-section. Partial alteration results from a tendency of strands exiting a die orifice to round with foaming rather than hold true to an aperture shape.

Strand foams offer a number of performance advances. For example, strand foams have excellent strength in a plane transverse to the direction of extrusion. They provide a predetermined shape with little or no need to trim. They function as low density products with distinguishable coalesced cellular strands. With the ability to change or alter die orifice shape and arrangement, strand foams readily adapt to variations in shape.

In one aspect, this invention comprises a two piece extrusion die for processing foamable polymer compositions, the die comprising a first solid body segment and a second solid body segment; the first solid body segment having a first major planar surface and a spaced apart, substantially parallel second major planar surface, the first solid body segment having defined therein a foamable composition receiving and distribution cavity, the cavity having an open end where it intersects the second major planar surface and a closed end disposed between the first and second major planar surfaces, the first solid body segment also having attached thereto a plurality of pins that begin at the closed end of the cavity and extend beyond the open end of the cavity; the second solid body segment having a first major planar surface and a spaced apart, substantial parallel second major planar surface, the second solid body segment having defined therein a plurality of spaced apart first apertures that are in fluid communication with both the first and second major planar surfaces of the second solid body segment; the first and second solid body segments, when assembled with the second major planar surface of the first solid body segment proximate to the first major planar surface of the second solid body segment, cooperating to provide a plurality of die gaps, the die gaps being formed by combinations of pins from the first solid body segment and the first apertures of the second solid body segment, the die gaps providing a fluid flow path from the foamable composition receiving and distribution cavity to the second major planar surface of the second solid body segment.

Skilled artisans can readily vary the shape of the aperture and associated pinto effect a desired hollow geometric shape.

A plurality of third apertures, not shown in any of the figures, that allow introduction of a fluid medium, blowing agent or other component inside at least one, preferably all, of the hollow foam strands can be provided. Each such third aperture is preferably defined within a corresponding pin. Each third aperture is in fluid communication with both a source of the fluid medium, blowing agent or other component and that end of the pin proximate to the second major planar surface of the second body segment.

The cavity defined in the first body segment may be subdivided into two or more subcavities, each subcavity being in fluid communication with a foamable polymer composition source. This provides an option for using different foamable compositions in a single cellular foam structure.

in another aspect, this invention is a method for producing a hollow multistrand or hollow coalesced strand foam article comprising:
a. providing a foamable composition comprising a blowing agent composition and at least one film-forming composition, the foamable composition being in a gel state;
b. extruding the foamable composition through a die of the invention to provide a hollow extrudate from each aperture;
c. converting the hollow extrudate into foamed hollow extrudate strands at a temperature that promotes foam bubble stability; and
d. allowing the foamed hollow extrudate strands to contact each other while such strands retain at least some surface tackiness in order to effect adhesion between adjacent individual strands and yield a hollow multistrand foam extrudate.

The foamable gel preferably comprises a polymer with a glass transition temperature (Tg) near the temperature of steam, i.e. nominally 100°C at atmospheric pressure (e. g. polystyrene or a blend of polystyrene with another polymer such as an ethylene/styrene interpolymer). The method further optionally includes a sequential step e. exposing the hollow multistrand foam extrudate to steam for a period of time sufficient to reduce foam density below that of the as-foamed hollow extrudate strands. Normal pressure steam produces satisfactory results in one minute. Longer or shorter times may be used as desired depending upon a variety of factors such as desired density reduction and apparatus operating parameters. Step e. can immediately follow step d. in a sequential fashion or, the hollow multistrand foam extrudate of step d. can be recovered and later treated as in Step e.

Recovery of the hollow multistrand foam extrudate employs conventional processing and handling techniques. For example, one may cool the hollow multistrand extrudate to a temperature that allows further handling while substantially maintaining foam dimensional stability.

The film-forming composition preferably includes at least one foamable material, preferably a thermoplastic polymer. However, materials other than thermoplastic polymers may be used. Virtually any material that forms a film also forms a bubble or foam and, as such, qualifies as a "foamable material". The foam has sufficient dimensional stability to form a hollow foam strand, together with adequate physical properties and product life for a desired end use.

The blowing agent composition must simply effect foaming of the film-forming composition. Components of such a composition at least partially determine temperatures used in preparing the hollow coalesced strand foams. Components of the film-forming composition also contribute to determining such temperatures. For example, when the film-forming material is a thermoplastic polymer, extrusion typically occurs at a temperature above the polymer's Tg, or for those having sufficient crystallinity to have a melt temperature (Tm), near the Tm. "Near" means at, above, or below and largely depends upon where stable foam exists. The temperature desirably falls within 30° centigrade (°C) above or below the Tm. Skilled artisans can readily determine appropriate temperatures for any film-forming material, whether it is a thermoplastic polymer or some other material.

The foam structure prepared by the method of the invention may comprise a plurality of coalesced, solid (not hollow) foam strands. The solid and hollow strands need not be, but preferably are, formed from the same foamable composition.

Article of manufacture fabricated, at least in part, from the cellular foam structure prepared by the process of the invention are desirably selected from sound insulation structures, thermal insulation structures, energy absorbing structures, packaging structures, cavity filling structures, air distribution structures, filter structures, impact energy management structures, surface leveling structures, fluid absorption and retention structures, object supporting structures, integrated building structures, geophysical structures, and bedding structures. Skilled artisans understand that this listing illustrates, but does not limit the use of cellular foam structure prepared by the process of invention. The foam structures have potential use in any known foam end use application.

### In the Drawings

Fig. 1 is an isometric illustration of an article having both solid coalesced foam strands and hollow coalesced foam strands;
Fig. 2a is a schematic bottom illustration of a two piece die block in accord with the present invention;
Fig. 2b is a schematic cross-section of the two piece die block illustrated in Fig. 2a; and
Fig. 3 is a schematic illustration of a cellular foam structure prepared by a process of the present invention that is suitable for use in conjunction with a wall building fabricated from studs.

The term "closed cells" typically refers to cells surrounded by resin membranes or "windows". By way of contrast, "open cells" designates cells in which some or all resin membranes or windows are perforated or missing.

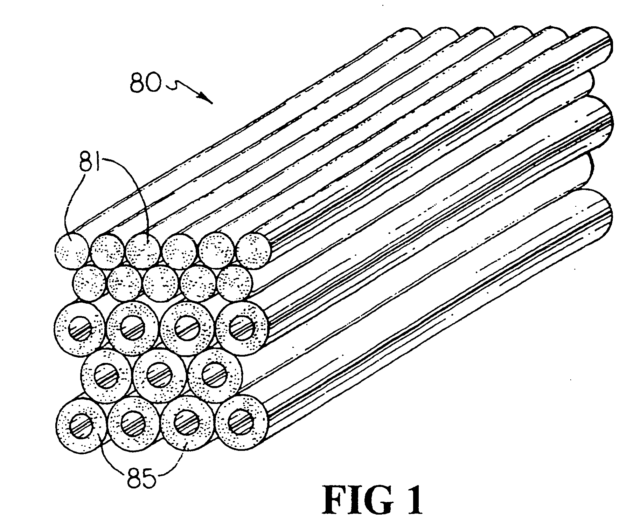

Fig. 1 schematically illustrates a foam structure or sheet 80 that could be produced by the extruder block of the invention. Foam sheet 80 comprises two rows of coalesced solid foam strands 81 and three rows of coalesced hollow foam strands 85. Fig. 1 shows all solid foam strands 81 in one segment or section and all hollow foam strands 85 in another segment or section. In addition, all solid foam strands 81 have one size and all hollow foam strands 85 have another size. Skilled artisans can readily vary the number, size and spatial arrangement of the solid and hollow foam strands to approximate virtually any shape . One such variation includes a mixture of sizes of both solid and hollow foam strands to attain a desired density profile. Another such variation adds a second section or segment of solid foam strands in such a manner as to sandwich a hollow foam strand section between two solid foam strand sections. Conversely, a solid foam strand segment may lie between two hollow foam strand foam segments.

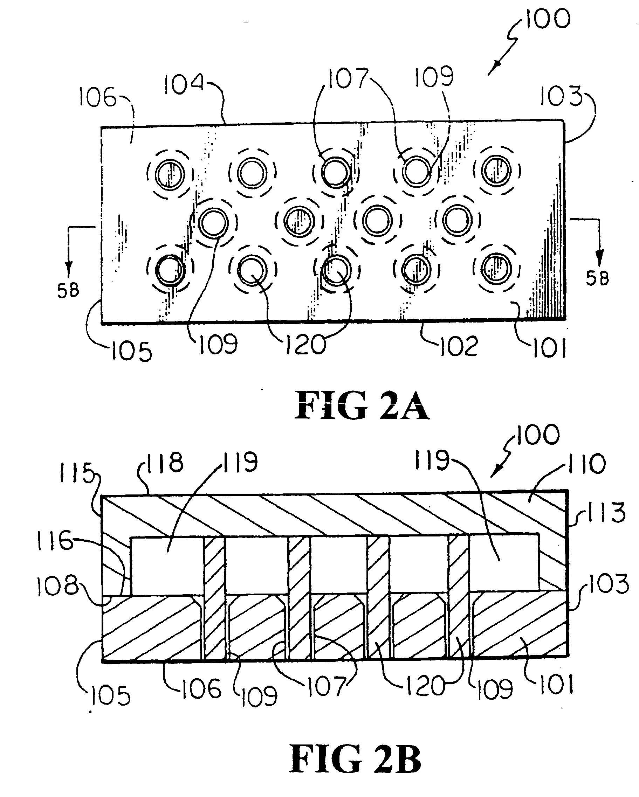

Figs. 2A and 2B schematically illustrate a two piece die block in accord with the present invention. The die block, generally designated by reference numeral 100 includes a first segment, nominally a bottom segment 101 and a second or top segment 110. Bottom segment 101 (Fig. 2B) has a first end 103, a generally parallel, but spaced apart, second end 105, a first side 102 (Fig. 2A), a generally parallel, but spaced apart, second side 104 (Fig. 2A), a lower surface 106 (Fig. 2B) and a generally parallel, but spaced apart, upper surface 108 (Fig. 2B). Bottom segment 101 has defined therein a plurality of spaced apart apertures 107. Apertures 107 desirably have a hollow right cylindrical cross section such that they are in fluid communication with both the lower surface 106 and upper surface 108. Each aperture 107 preferably has a flared or countersunk segment proximate to, and intersecting with upper surface 108. The top Segment 110, illustrated only in Fig. 2B, has a first end 113, a generally parallel, but spaced apart, second end 115, a first side 112 (not shown), a generally parallel, but spaced apart, second side 114 (not shown), a lower surface 116 and a generally parallel, but spaced apart, upper surface 118. Top segment 118 has defined therein a foamable composition receiving and distribution cavity 119 that is in fluid combination with a foamable composition source (not shown) and the plurality of apertures 107 when the die block is assembled as shown in Fig. 2B. Top segment has secured thereto a plurality of pins 120, preferably one for each aperture in the embodiment shown in Figs. 2A and 2B. Each combination of a pin 120 and an aperture 107 preferably forms an annular ring or die gap 109. The foamable composition desirably moves from cavity 119 through the plurality of annular rings 109 to lower surface 106 of bottom 101 where it exits the die and begins foaming.

The die block illustrated in Figs. 2A and 2B lead to hollow foam strand structures. The die block illustrated in Figs. 2A and 2B can be modified to allow formation of both hollow foam strand structures and solid foam strands in preparing a coalesced, composite foam structure that includes both hollow and solid foam strands.

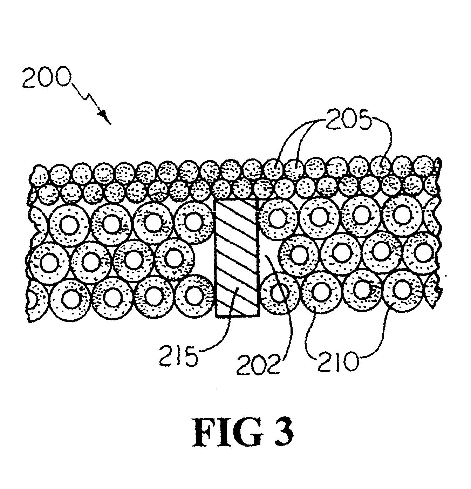

Fig. 3 schematically illustrates a cellular foam structure when used in conjunction with a framing stud member of a building wall segment. The cellular foam structure, designated by reference numeral 200 consists of two layers of coalesced solid foam strands 205 and three layers of coalesced hollow foam strands 210. The two layers of solid foam strands provide a relatively smooth and stiff or rigid surface that facilitates further construction activities such as installing siding, paneling or both to form a finished, exterior building wall segment. The three layers of hollow.foam strands 210 are arranged so as to create a groove or slot 202 that accommodates framing stud member 215. Slot 202 preferably has a width that is narrower than that of framing stud member 215. With the width difference, hollow foam strands 215, being more flexible and compressible than the solid foam strands 205, provide a friction fit against adjacent surfaces of framing stud member 215. The friction fit provides an acceptable means to interfere with a flow of moisture or cold air from one side of the wall segment to the other. The number of solid foam strand layers and hollow foam strand layers will vary widely depending upon a chosen application.

For example, one may eliminate solid foam strand layers or have as many as dozens of solid foam strand layers so long as there is at least one hollow foam strand layer, preferably several hollow foam strand layers up to and including many dozens of such layers. Fig. 3 merely illustrates an application employing a combination of coalesced solid foam strands and coalesced hollow foam strands.

Skilled artisans readily understand that Fig. 3 represents only a partial view of a building wall segment and that, in actual practice, one would use a much wider-cellular foam structure with multiple grooves, each of which desirably accommodates a framing stud member 215. Skilled artisans also understand that, as with the structure illustrated in Fig. 1, many variations of this foam structure can be used in such a building wall segment. Skilled artisans can readily adapt these structures and many variations thereof in any of the end use applications described herein.

The above approach offers a number of advantages over conventional methods of stud wall construction and insulation. First, by incorporating stud spacing into the foam structure and providing for a friction fit via the compressible hollow foam tubes, one builds in a tolerance for less than exact spacing between studs. Second, one can insulate a wall segment simultaneously with or immediately following fabrication of that segment. This effectively eliminates a comparably more time consuming step of installing fiberglass bats, blowing in cellulose or generating urethane foam in spaces between studs. Third, the solid foam strand segment effectively serves as a house wrap because the foam strands have a skin. Fourth, the foam sheet or structure is fully recyclable whereas urethane foam, fiberglass bats and blown-in cellulose pose recycling challenges. Although the above discussion relates to stud wall construction, similar benefits apply to other building construction such as rafter construction.

The overall width and length of the foam structure is preferably selected so that it is of a size and weight that it can be easily handled by construction workers. In the United States, polymer foam sheet insulation is commonly sold in 48 inch (122 centimeter (cm)) widths, which easily accommodates standard frame construction using 16-inch (40.6 cm) center spacing for the support members. Similarly, the foam structure is preferably manufactured in a width equal to some multiple of the spacing of the support members in the wall being constructed. Widths of from 16 inches to 96 inches (40.6 to 243.8 cm) are preferred, and widths of 32 to 64 inches (81.2 to 162.4 cm) are more preferred. Board lengths are not critical, and are selected for convenience in handling. Lengths of from 4 to 16 feet (1.22 to 4.88 meters (m)) are typically used in frame construction and are suitable for the board. In other countries, polymer foam sheet insulation codes and construction practices may dictate different sheet sizes.

In addition to serving as an insulating means for wall construction, foam or structures like that shown in Figure 1 may also be used to fill and insulate spaces between rafters in a roof construction or spaces between floor joists. While rectangular structures, desirably embodying both hollow and solid strands to impart a combination of rigidity and flexibility, may satisfy many space requirements, other shapes and sizes also work. If desired, one can use only the hollow foam strands to fill such spaces.

The foam structures, irrespective of whether they comprise only hollow foam tubes or a combination of hollow foam tubes and solid foam strands, have a variety of practical applications. For example, a structure like that shown in Fig. 1 or Fig. 3, but lacking slot 202 (Fig. 3), may be used as a leveling board or surface, particularly for uneven masonry and concrete walls and floors. As an alternative, such structures may be used in renovating and repairing flat roofs as the relatively compressible hollow tubes effectively allow one to eliminate the step of stone removal provided there is no concern about the weight of such stones. Structures that include only the hollow foamed tubes may function as masonry cavity wall insulation as the hollow tubes conform to uneven brick or stone surfaces more readily than solid foam strands. Such hollow strand structures, with or without gaps for the studs, may also be used to fill space (s) between studs and a prefabricated exterior, such as cement or concrete, brick or stonework, and wallboards or siding.

The foam structures may also be laminated to various facing materials, including but not limited to gypsum board, cementitious board, plywood, and oriented strand board. The foam portion of these laminates may be composed of hollow strands only or a combination of solid and hollow strands as described above.

When placed vertically beneath poured slab foundations, structures with only hollow foamed tubes alleviate at least some stresses that promote concrete cracking. The vertical orientation also provides benefits for packaging applications due to its high energy absorption to density ratio and built-in drainage capability. Perforation of foam surfaces provides a mechanism for sound drainage from an adjacent space. The foam structures, with or without associated solid foam strands, yield benefits in terms of thermal and sound insulation while providing built-in conduits for wires. Foam structures also find use in a variety of automotive applications. For example, structures having at least one layer, preferably several (even dozens) layers of hollow foam tubes and, optionally, at least one, preferably several (up to and including several dozen) layers of solid foam strands may be used as part of an automobile interior headliner or as part of an energy absorbing structure inside an automobile passenger compartment. The number and arrangement of coalesced hollow foam strands and optional coalesced solid foam strands may take on any configuration within the imagination of skilled artisans.

Hollow foam tubes produced in accord with the present invention have a product density that is desirably at least 0.3 pound per cubic foot (pcf) (5 kilograms per cubic meter (kg/m³). Skilled artisans understand that as polymer or foamable material density increases, resultant foam structure densities also increase to as much as 40 pcf (640 kg/m³). The foam structure density is preferably from 0.3 to 20 pcf (5 to 320 kg/m³). Hollow foam tubes with a product density of, for example, three to 12 pcf (48 to 192 kg/m³) offer potential utility as inserts for automobile bumpers as the tubes should buckle upon impact and provide a relatively large surface area for energy dissipation. Product or resultant foam structure density is believed to provide a more accurate reflection of density than foam density due to difficulty in determining density of hollow foamed tubes using a conventional water immersion test. "Foam density", when used in conjunction with hollow foam tubes, refers to density of the foam tube walls rather than to a complete foamed tube which necessarily includes a hollow space. Products produced in accord with of the invention have a foam density that is desirably within a range of from 0.35 to 60 pcf (6 to 960 kg/m³), preferably from 0.5 to 40 pcf (8-640 kg/m³).

Foam structures, particularly those that contain few, if any, solid foam strands, have potential use as mattress or bedding inserts with channels for air ventilation. If the foam structures have a high open cell content (typically on the order of 90% or more open cells), they serve as suitable candidates for filtration applications and absorption (both liquid and gas) applications. The foregoing discussion of potential utility merely illustrates a few of the uses for the foam structures. Skilled artisans can readily envision a much greater number. Even then, they will only scratch the surface of potential uses.

Skilled artisans recognize that one may vary any one or more of the number, type and spacing of apertures without departing from the scope of the present invention. One may also create open channels or voids in a foam structure by plugging or closing some die openings in dies used to fabricate the foam structures. US-A-4,824,720 discloses such a technique. One may further increase resultant foamed article size by increasing the number of apertures. One may also, for example arrange paired aperture segments so as to form a desired shape other than generally rectangular. Any shape or arrangement of paired aperture segments may be altered by interspersing single apertures among the paired aperture segments to dispose solid foam strands among hollow, tubular foam strands. Solid foam strands may also form a core surrounded by hollow, tubular foam strands, a wall around a core of hollow, tubular foam strands or a combination or both. The present invention is not limited to any particular geometric shape or combination of hollow and solid strands. Virtually any shape or combination of solid and hollow strands can be produced. Such shapes and combinations include multiple layers or regions of either solid or hollow strands. For example, a first and third layer of a multiple layer plank may comprise hollow strands with a second or middle layer that comprises solid strands. Alternatively, a right and a left hand section of a multiple section foam might be hollow strands while the middle section might be solid strands. By doing so, one would create a board with rigid center and flexible edges.

One may also use dissimilar polymeric compositions to form different portions of the foamed strand structure. For example, one might choose to form the solid and hollow strands from different polymeric compositions. The strands of different composition can be adhered together by any means so long as the strands have sufficient inter-strand adhesion for desired purposes. Known adhesion techniques involve use of adhesives and application of heat or thermal radiation. A preferred technique employs continuous extrusion via two or more different extruders and strand to strand coalescence after strands exit their respective die orifices. Alternatively layers of foam strands could be cross-laminated by the adhesive means described above.

One can also produce a structure where every hollow strand or selected hollow strands are composed of two or more dissimilar materials polymeric, organic or inorganic materials. This could be produced by coextrusion, cofoaming, spraying, or coating (as with latex) materials or vapor phase deposition on the inner surface of the hollow strands or by dipping the strands into solutions or dispersions with subsequent coating of the additional material onto the strand surface.

The foam structures are suitably fabricated from foamable compositions that comprise an organic polymer, a blowing agent and a nucleating agent. The polymer is suitably selected alkylene aromatic polymers such as polystyrene; rubber-modified alkylene aromatic polymers more commonly known as high impact polystyrene (HIPS) alkylene aromatic copolymers such as styrene/acrylonitrile or styrene/butadiene; hydrogenated alkylene aromatic polymers and copolymers such as hydrogenated polystyrene and hydrogenated styrene/butadiene copolymers; α-olefin homopolymers such as low density polyethylene, high density polyethylene and polypropylene; linear low density polyethylene (an ethylene/octene-1 copolymer) and other copolymers of ethylene with a copolymerizable, monoethylenically unsaturated monomer such as an α-olefin having from 3 to 20 carbon atoms; copolymers of propylene with a copolymerizable, mono-ethylenically unsaturated monomer such as an α-olefin having from 4 to 20 carbon atoms, copolymers of ethylene with a vinyl aromatic monomer, such as ethylene/styrene interpolymers; copolymers of ethylene with an alkane such as an ethylene/hexane copolymer; thermoplastic polyurethanes (TPU's); and blends or mixtures thereof, especially blends of polystyrene and an ethylene/styrene interpolymer. In addition, blends of one of the foregoing polymer with a rubber, such as polybutadiene or polyisoprene, also yield satisfactory results. Other suitable rubbers include ethylene/propylene rubbers, ethylene/propylene/ diene monomer (EPDM) rubbers and natural rubbers provided such rubbers are converted to coalesced foam strands prior to cross-linking.

Suitable unsaturated monomers include C₁₄ alkyl acids and esters, ionomeric derivatives of such acids, C₂₋₆ dienes and C₃₋₉ olefins. Examples of such monomers include acrylic acid, itaconic acid, maleic acid, methacrylic acid, acrylic acid, esters of such acids such as ethyl methacrylate, methyl methacrylate, ethyl acrylate and butyl acrylate, vinyl esters such as vinyl acetate, carbon monoxide, maleic anhydride, propylene, isobutylene, and butadiene. Illustrative ethylene copolymers include ethylene/propylene, ethylene/butene-1 and ethylene/octene-1.

Other suitable polymers include polyvinyl chloride, polycarbonates, polyamides, polyimides, polyesters such as polyethylene terephthalate, polyester copolymers such as polyethylene terephthalate-glycol (PETG), phenol-formaldehyde resins, thermoplastic polyurethanes (TPUs), biodegradable polysaccharides such as starch, and polylactic acid polymers and copolymers. The polymer is preferably polyethylene (PE), polystyrene (PS), polypropylene (PP), a blend of PS and an ethylene/styrene interpolymer (ESI), a blend of ESI and PE, a blend of ESI and PP, a blend of PS, PE and ESI or a blend of ESI with any one or more polyolefin or ethylene/alpha-olefin copolymers, terpolymers or interpolymers produced using a metallocene catalyst or a constrained geometry catalyst (such as The Dow Chemical Company's INSITE^{TM} catalyst).

US-A-3,723,586 lists a number of foamable resins at column 6, lines 2151. Such resins include polymers of one or more vinylidene monomers. The vinylidene monomers include, for example, ethylene, propylene, butadiene, styrene, alpha-methylstyrene, ortho-, meta-or paramethylstyrene, and other aromatic alkylstyrenes. The vinylidene monomers also include substituted monomers such as, acrylonitrile, methacrylonitrile, vinyl chloride, vinyl acetate and other vinyl esters, methyl acrylate, ethyl acrylate, propyl acrylate, butyl acrylate, and corresponding methacrylates. The resins include toughened polystyrene or polystyrene that is physically or chemically combined with a minor proportion (on the order of 1-15 wt, based on polymer weight) of a natural or synthetic rubber such as a linear or branched polymer of a conjugated diene like butadiene, or isoprene. The polystyrene and toughened polystyrene may also include small amounts of one or more other vinylidene monomers such as acrylonitrile or methyl methacrylate.

US-A-4,824,720 describes a number of foamable, non-aromatic olefin polymers at column 3, line 57 through column 4, line 22. Such polymers include copolymers of ethylene and a copolymerizable polar monomer, especially a carboxyl-containing comonomer. Examples include copolymers of ethylene and acrylic acid or methacrylic acid and C₁₋₄ (one to four carbon atoms) alkyl esters or ionomeric derivatives thereof; ethylene/vinyl acetate (EVA) copolymers; ethylene/carbon monoxide (ECO) copolymers; anhydride containing olefin copolymers of a diene and a polymerizable olefin monomer other than ethylene, such as an ethylene/propylene/non-conjugated diene (EPDM) polymer; copolymers of ethylene and an alpha-olefin (α-olefin) having a very low molecular weight (weight average or Mw), such as those having a density of less than 0.92 g/cc; blends of any of the foregoing copolymers; and blends of any of the foregoing copolymers with a polyethylene (high, medium or intermediate and low density). An "ionomer" is a partially or completely neutralized olefin polymer or copolymer with pendant carboxylic acid groups (e. g. an ethylene/acrylic acid (EAA) copolymer). Neutralization occurs by way of cationic groups such as NH₄+, Na+, Zn++, and Mg++.

Skilled artisans recognize that the various descriptions of foamable materials presented herein are merely illustrative. They also recognize that many of the listed materials can be combined or blended where desired.

The foamable compositions may include one or more conventional foam composition additives such as stabilizers, fillers and reinforcing materials. Fillers and reinforcing materials include, for example, conventional materials such as conductive carbon black, furnace black, thermal black, graphite, clays, metal filings or powders, inorganic salts (e. g. calcium carbonate), wood flour, milled corn husks, milled rice hulls, and nanometer-size materials (more commonly known as "nanofillers").

Suitable alkylene aromatic polymers comprise at least one monovinylidene aromatic monomer such as styrene, alkylstyrenes including those with at least one alkyl substituent with one to four carbon atoms (C₁₋₄), and halogenated styrenes. Specific examples include styrene, alpha-methylstyrene, ortho-, meta-or para methylstyrene or ethylstyrene as well as chlorostyrene. Suitable comonomers include acrylonitrile, acrylic acid, acrylic acid esters such as butyl acrylate, olefinic monomers such as ethylene or propylene, and mono-or poly-unsaturated olefinic monomers such as butadiene, isoprene and mixtures thereof.

Polyester resins have a combination of low melt strength and high melting temperature that usually makes it difficult to produce foams of low densities and large cross-sections. Chemically modified polyester resins, such as para-maleic anhydride modified polyethylene terephthalate, suffer similar shortcomings and typically produce no more than one inch (25 mm) thick foams with a density of no less than 2.5 pcf (40 kg/m³). Hollow, low density foamed polyester resin structures can be prepared by the present invention. One hypothesis suggests that the hollow strand structure promotes rapid cooling and consequent crystallization of a foamable polyester resin composition. The hollow tube configuration increases available surface area for loss of blowing agent and, as a result, speeds removal of heat from the composition. The combination of rapid cooling and crystallization enables formation of stable foam cell walls.

The foamable compositions also include a blowing agent composition or combination. Skilled artisans may readily select a suitable blowing agent composition without undue experimentation. Illustrative blowing agents include isobutane (with or without carbon dioxide (CO₂)), water, CO₂, nitrogen, noble gases such as argon, nitrous oxides such as nitric oxide (NO), nitrous oxide (N₂O) and nitrogen dioxide (NO₂), and air. Blowing agents may also be generated in situ from chemical compounds such as azo-compounds (e. g. azodicarbonamide, and azodiisobutyronitrile), nitroso-compounds (e. g. N,N'-dinitrosopentamethylenetetramine), or aromatic hydrazides (e. g. P,P'-oxybenzenesulfonyl hydrazide) to generate nitrogen by thermal decomposition and mixtures of carbonates and acids to generate carbon dioxide. Other known blowing agents include hydrocarbons such as ethane, ethylene, propane, propylene, butane, butylene, isobutane, isobutene, pentane, isopentane, cyclopentane, hexane, heptane, cyclohexane and mixtures thereof; ethers such as dimethyl ether (DME), methyl ethyl ether and diethyl ether; alcohols such as methanol, ethanol, propanol, isopropanol, butanol, pentanol, hexanol and mixtures thereof; and any of a variety of partially halogenated hydrocarbons such as chloroethane, chlorodifluoromethane (R-22), 1-chloro-1, 1-difluoroethane (R-142b), 1,1,1,2-tetrafluoroethane (R-134a), pentafluoroethane ( (R-125), 1,1-difluoroethane (R-152a), 1,1,1-trifluoroethane (R-143a), 1-fluoroethane (R-161), difluoromethane (R-32), 1,1,1,3,3-pentafluoropropane (HFC-245 fa), 1,1,1,3,3-pentafluorobutane (HFC-365 mfc) and mixtures thereof.

Blowing agent compositions desirably lack components that have ozone depletion potential (ODP). The blowing agent composition preferably comprises at least one blowing agent selected from water, carbon dioxide, nitrogen, a nitrous oxide, a noble gas, air, a hydrocarbon, an ether, a lower (1 to 6 carbon atoms) alcohol, a partially halogenated hydrocarbon, ammonia, water and mixtures of two or more of such blowing agents. Particularly suitable blowing agent compositions include isobutane (with or without carbon dioxide (CO₂)), CO₂ (with or without at least one of water, ethanol, isopropanol and dimethyl ether); at least one of R-134a, R-134, R-142b and R-152a, with or without at least one of ethanol, isopropanol, dimethyl ether, water and carbon dioxide; dimethyl ether with or without at least one of water, ethanol, isopropanol and carbon dioxide; and water. The foregoing compositions may also include one or more hydrocarbons such as propane, butane, isobutane, pentane, isopentane, neopentane and cyclopentane.

The blowing agent and blowing agent combinations described herein merely illustrate some that will work. Skilled artisans can readily select suitable blowing agents or blowing agent combinations for a chosen foamable composition.

Incorporation of a blowing agent into a molten polymer material to form a foamable composition involves use of known apparatus such as an extruder, a mixer or a blender. One preferred procedure involves mixing the blowing agent with molten polymer under an elevated pressure sufficient to prevent substantial expansion of the molten polymer and disperse the blowing agent throughout the molten polymer in a generally uniform manner.

The blowing agent is present in an amount sufficient to generate a desired level of foaming when the foamable composition exits die orifices. A suitable amount lies within a range of from 0.2 to 50 percent by weight (wt%), based on foamable composition weight. An amount less than 0.2 wt% leads to an insufficient degree of foaming. An amount greater than 50 wt% can be used, but offers limited performance advantages while increasing cost and leading to increased difficulty in controlling foaming without distortion. The amount is preferably within a range of 0.2 to 25 wt%, based on foamable composition weight.

The foamable compositions also comprise one or more additives. Suitable additives include nucleating agents, extrusion aids, antioxidants, flame retardants, colorants and pigments.

Nucleating agents help control foam cell size. Conventional nucleating agents include inorganic substances such as calcium carbonate, calcium silicate, talc, clay, titanium dioxide, silica, barium sulfate, diatomaceous earth, and mixtures of citric acid and sodium bicarbonate. Stearic acid salts such as calcium stearate and magnesium stearate also provide satisfactory results. Suitable amounts of nucleating agent lie within a range of from 0.01 to 5 parts by weight per hundred parts by weight of polymer resin (pph), both ends of the range being included. The range is desirably from 0.1 to 3 pph.

Preparing the hollow multistrand or hollow coalesced strand polymer foam structures by the process of the present invention involves a multistep process. Step one involves providing a foamable composition that comprises a blowing agent composition and at least one film-forming composition, preferably a foamable polymer. The polymer is desirably selected from olefin homopolymers, olefin copolymers, alkylene aromatic polymers and copolymers, polyesters, and blends of ethylene/styrene interpolymer and polystyrene. The foamable composition is preferably in a gel state. The foamable composition optionally comprises at least one additive or modifier selected from fire retardant chemicals, stabilizers, antioxidants, colorants, permeability modifiers, plasticizers, static dissipative agents, anti-static agents such as amines, amides and stearates, permeation modifiers such as stearyl stearamide, glycerol monostearates (GMS), glycerol mono-di-stearates (GMDS), surfactants and opacifiers. Sequential step two focuses upon extruding the.foamable composition through a die having a plurality of first orifices that yield a hollow extrudate. Extrusion typically occurs at a temperature above the polymer's Tg, or for those having sufficient crystallinity to have a Tm, near the Tm. Step three centers upon converting the hollow extrudate into foamed hollow extrudate strands. Step four maintains the foamed hollow extrudate strands at an elevated temperature for a period of time sufficient to effect adhesion between adjacent individual strands and yield a hollow multistrand polymer foam extrudate. Step five allows the hollow multistrand foam extrudate to cool to a temperature sufficient for further handling and recovery while substantially maintaining foam dimensional stability.

A skilled artisan can envision numerous alternative processes for adhering the strands to one another. They include, but are not limited to, the use of adhesives, elevated temperatures to partially melt the surfaces of the strands, targeted use of infrared (IR), microwave (MW) or radio-frequency (RF) radiation to impart adhesive properties to the surfaces of the foam tubes. "Adhesion" (and its variations) means that adjacent strands are attached together either at enough points along the respective strand lengths or continuously (or nearly so) to impart structural integrity to a foam structure.

"Coalescence" may be regarded as a special subset of adhesion in that foam strands exiting extruder dies typically retain sufficient heat to render their surfaces tacky for long enough to effect the same structural integrity when adjacent strands come into contact with each other.

Preparation of the foamable composition of step one suitably involves mixing the film-forming composition, preferably a polymer, and blowing agent(s) in a mixer, preferably a heated extruder, to form an extrudable mixture, preferably in a melt state, and then at least partially cooling the extrudable mixture from a melt state to a gel state. Although preparation of the foamable composition preferably employs a heated extruder, skilled artisans can readily substitute other apparatus that accomplish the same purpose. US-A-5,817,705 and US-A-4,323,528 disclose one such apparatus. This apparatus, commonly known as an "extruder-accumulator system" allows one to operate a process on an intermittent, rather than a continuous, basis. The apparatus includes a holding zone or accumulator where the foamable composition remains under conditions that preclude foaming. The holding zone is equipped with an outlet die that opens into a zone of lower pressure, such as the atmosphere. The die has an orifice that may be open or closed, preferably by way of a gate that is external to the holding zone. Operation of the gate does not affect the foamable composition other than to allow it to flow through the die. An extrusion die of the invention takes the place of the die disclosed In the references.

By forcing the extrudable mixture through the extrusion die of the invention, one obtains (a) a plurality of separately extruded and thereafter coalesced hollow foam strands or (b) a combination of a plurality of separately extruded and thereafter coalesced solid foam strands and a plurality of separately extruded and thereafter coalesced hollow foam strands. In a preferred embodiment, a grouping of solid, coalesced foam strands forms one part of a composite cellular foamed structure and a grouping of hollow, coalesced foam strands forms a second part of a composite cellular foamed structure. The blowing agent composition at least partially determines the temperatures for each of the process steps. Preparation of such a composite foamed structure preferably employs a die that has a plurality of first orifices or orifice sets that yield hollow foam strands and a plurality of second or single orifices that yield solid foam strands.

Where the extrusion die provides for both solid and hollow foam strands, die apertures or orifices for both the solid and hollow foam strands may take on nearly any geometric shape so long as the shapes yield, as appropriate, the respective solid and hollow foam strands. Suitable geometric shapes include round, square, polygonal, x-shapes, cross-shapes and star-shapes. Selection of a particular shape or combination of shapes allows production of a cellular foamed structure with a specific profile or shape. The shape is preferably round or circular, especially for the hollow foam strands. Where the cellular foam structures comprise both hollow foam strands and solid foam strands, the geometric shapes, while preferably the same, may differ.

Foam expansion following extrusion of a foamable composition from the extrusion die suitably takes place in a normal atmospheric environment. If desired, however, a subatmospheric environment such as provided by a partial vacuum or a super-atmospheric environment such as provided by gaseous overpressure may also be used. Skilled artisans readily understand use of various pressures and measures to attain such pressures. Skilled artisans also understand the use of a steam chamber to reduce foam density when foamable compositions comprise polystyrene. Blends of polystyrene and ethylene/styrene interpolymer yield similar foam density reductions in a steam chamber.

Transportation of resultant foam structures away from the extrusion die suitably involves use of any of a variety of conventional conveying apparatus. Illustrative apparatus include continuous belts or rollers. If desired, temperature control means may be incorporated into such apparatus.

The foam structures may, if desired, be subjected to any one or more of several conventional post-treatment procedures. Such procedures include, for example, reduction of foam density through exposure to an elevated temperature environment such as that established with an infrared oven, a steam oven or a hot air oven, and surface modification through, for example, embossing, re-melting or bonding a polymer film to the foam structure.

The foam structures preferably comprise foamed strands wherein foam cells are predominantly closed cells as determined in accordance with American Society for Testing and Materials (ASTM) Test D-2856A. The foam structures preferably have a closed cell percentage of greater than 50 percent, based on total number of cells, not including interstitial channels or voids between foam strands or channels within the hollow strands that form at least part of the foam structures. Within the foam portion of a given foam strand, average cell sizes typically range from 25 to 7000 micrometers (µm), preferably from 50 to 2000 µm and more preferably from 100 to 1500 µm. Such foam structures provide suitable thermal insulation, sound insulation and dimensional stability parameters.

While predominantly closed cell structures may be preferred for a number of applications, other applications readily employ cell structures where open cells predominate. Such other applications include sound control, rapid release (curing) of blowing agent from the foam, and foams that have a softer feel when lightly touched.

If the foamable composition comprises a cross-linkable composition such as polyethylene or polyurethane or a polyol-isocyanate blend and one or more additives that promote cross-linking, the resulting foam structure may be subjected to conditions that effect cross-linking and convert the cross-linkable composition to a thermoset polymer. Skilled artisans can readily select appropriate cross-link additives and cross-linking or curing conditions for any-given composition without undue experimentation.

## Claims

1. A two piece extrusion die (100) for processing foamable polymer compositions, the die comprising a first solid body segment (110) and a second solid body segment (101); the first solid body segment (110) having a first major planar surface (118) and a spaced apart, substantially parallel second major planar surface (116) , the first solid body segment (110) having defined therein a foamable composition receiving and distribution cavity (119), the cavity (119) having an open end where it intersects the second major planar surface (116) and a closed end disposed between the first and second major planar surfaces, the first solid body segment (110) also having attached thereto a plurality of pins (120) that begin at the closed end of the cavity (119) and extend beyond the open end of the cavity (119); the second solid body segment (101) having a first major planar surface (108) and a spaced apart, substantially parallel second major planar surface (106), the second solid body segment (101) having defined therein a plurality of spaced apart first apertures (107) that are in fluid communication with both the first and second major planar surfaces (108, 106) of the second solid body segment (101); the first and second solid body segments (110, 101), when assembled with the second major planar surface (116) of the first solid body segment (110) proximate to the first major planar surface (108) of the second solid body segment (101), cooperating to provide a plurality of die gaps (109), the die gaps (109) being formed by combinations of pins (120) from the first solid body segment (110) and the first apertures (107) of the second solid body segment (101), the die gaps (109) providing a fluid flow path from the foamable composition receiving and distribution cavity (119) to the second major planar surface (106) of the second solid body segment (101).

2. A die of Claim 1, further comprising at least two second apertures, the second apertures being defined in the second solid body segment (101) and in fluid communication with both major planar surfaces (108, 106) of said second solid body segment (101), the second apertures being spaced apart from the first apertures (107).

3. A die of Claim 1 or Claim 2, further comprising a plurality of third apertures, each third aperture being defined in a pin (120) in such a manner as to be in fluid communication with both that end of the pin (120) proximate to the second major planar surface (106) of the second solid body segment (101) and a source of a fluid medium, blowing agent or other component.

4. A method for producing a hollow multistrand or hollow coalesced strand foam article comprising:
a. providing a foamable composition comprising a blowing agent composition and at least one film-forming composition, the foamable composition being in a gel state;
b. extruding the foamable composition through a die (100) as defined in any one of the preceding claims to provide a hollow extrudate from each aperture (107);
c. converting the hollow extrudate into foamed hollow extrudate strands (85; 210) at a temperature that promotes foam bubble stability; and
d. allowing the foamed hollow extrudate strands (85; 210) to contact each other while such strands retain at least some surface tackiness in order to effect adhesion between adjacent individual strands and yield a hollow multistrand foam extrudate (80; 200).

5. A method of Claim 4, wherein the blowing agent composition comprises at least one blowing agent selected from carbon dioxide, nitrogen, a nitrous oxide, a noble gas, air, a hydrocarbon, an ether, a lower (1 to 6 carbon atoms) alcohol, a partially halogenated hydrocarbon, ammonia, water and mixtures or two or more of such blowing agents.

6. A method of Claim 4 or Claim 5, wherein the die also comprises a plurality of second orifices that yield a solid extrudate whereby step b yields a combination of solid foam extrudates and hollow foam extrudates and step d yields a multistrand foam extrudate that comprises both solid foam extrudate strands (81; 205) and hollow foam extrudate strands (85; 210).

7. A method of Claim 6, wherein solid foam extrudate strands (81; 205) form one part of the multistrand foam extrudate (80; 200) and the hollow foam extrudate strands (85; 210) form a second part of the multistrand foam extrudate (80; 200), the presence of both hollow and solid foam strands constituting a composite cellular foamed structure.

8. A method of any one of Claims 4 to 7, wherein the film-forming composition comprises polystyrene and, optionally, ethylene/styrene interpolymer, and the method further comprises sequential step e. exposing the hollow multistrand foam extrudate to steam for a period of time sufficient to reduce foam density below that of the as-foamed hollow extrudate strands.

9. A method of any one of Claims 4 to 8, wherein the film-forming composition comprises a polymer with a glass transition temperature near the temperature of steam, i.e nominally 100°C at atmospheric pressure.

10. A method of any of Claims 4 to 9, wherein the temperature of step c. is above the polymer's glass transition temperature (Tg), or for those having sufficient crystallinity to have a melt temperature (Tm), near the Tm.

11. A method of any one of Claims 4 to 7, wherein the foam composition comprises at least one film-forming material selected from olefin homopolymers, olefin copolymers, alkylene aromatic polymers and copolymers, polyesters and copolymers, polycarbonates, polyamides, polyimides, halogenated olefin polymers and copolymers, natural polymers, proteins, polysaccharides, thermoplastic polyurethanes, and blends of polystyrene and ethylene/styrene interpolymer.

12. A method of any one of Claims 4 to 7 and 11 wherein strands have different polymeric compositions.

13. A method of any one of Claims 4 to 7 and 11, wherein the foam has a closed cell content, as determined in accordance with ASTM D-2856A, of greater than 50 percent, based on total number of cells, not including interstitial channels or voids between foam strands or channels within the hollow strands that form at least part of the foam structures.

14. A method of Claim 13, wherein the foam portion of said strands have an average cell size of from 25 to 7000 micrometers.

15. A method of Claim 14, wherein said average cell size is 50 to 2000 micrometers.

16. A method of Claim 15, wherein said average cell size is 100 to 1500 micrometers.

17. A method of any one of Claims 4 to 7 and 11, wherein the foam has an open cell content, as determined in accordance with ASTM D-2856A, of greater than 50 percent, based on total number of cells, not including interstitial channels or voids between foam strands or channels within the hollow strands that form at least part of the foam structures.

18. A method of Claim 11, wherein said film-forming material is a cross-linkable polyol-isocyanate blend, the foam composition further comprises at least one cross-link promoter, and the extrudate is subjected to cross-linking conditions to form a thermoset structure.

19. A method of Claim 11, wherein said film-forming material is polypropylene.

20. A method of any one of Claims 4 to 7 and 11, wherein every hollow strand or selected hollow strands are composed of two or more dissimilar polymeric, organic or inorganic materials.

21. A method of Claim 20, wherein said strands are produced by coextrusion.

22. A method of Claim 20, wherein said strands are produced by cofoaming.

23. A method of Claim 20, wherein said strands are produced by spraying or coating materials or vapor phase deposition on the inner surface of the hollow strands.

24. A method of Claim 20, wherein said strands are produced by dipping the strands into solutions or dispersions with subsequent coating of the additional material onto the strand surface.

25. A method of any one of Claims 4 to 24 further comprising adhering the coalesced, extruded strands to at least an external surface portion of a facing material selected from gypsum board, cementitious board, plywood and oriented strand board.

26. A method of any one of Claims 4 to 25 comprising fabricating, at least in part, from the coalesced, extruded strands an article selected from sound insulation structures, thermal insulation structures, energy absorbing structures, packaging structures, cavity filling structures, air distribution structures, filter structures, impact energy management structures, surface leveling structures, fluid and gas absorption and retention structures, object supporting structures, bedding structures, integrated building structures and geophysical structures.

## Patentansprüche

1. Zweiteilige Extrusionsdüse (100) zur Verarbeitung von aufschäumbaren Polymerzusammensetzungen, wobei die Düse ein erstes Vollkörpersegment (110) und ein zweites Vollkörpersegment (101) enthält; das erste Vollkörpersegment (110) eine erste planare Hauptfläche (118) und eine im Wesentlichen parallele zweite planare Hauptfläche (116) im Abstand davon aufweist, das erste Vollkörpersegment (110) darin abgegrenzt einen Hohlraum (119) zur Aufnahme und Verteilung einer aufschäumbaren Zusammensetzung aufweist, der Hohlraum (119) ein offenes Ende, wo er die zweite planare Hauptfläche (116) schneidet und ein geschlossenes Ende, das zwischen der ersten und zweiten planaren Hauptfläche angeordnet ist, aufweist, das erste Vollkörpersegment (110) auch daran befestigt eine Vielzahl von Stiften (120) aufweist, die an dem geschlossenen Ende des Hohlraums (119) beginnen und sich über das offene Ende des Hohlraums (119) hinaus erstrecken; das zweite Vollkörpersegment (101) eine erste planare Hauptfläche (108) und eine im Wesentlichen parallele zweite planare Hauptfläche (106) im Abstand davon aufweist, das zweite Vollkörpersegment (101) darin abgegrenzt eine Vielzahl von im Abstand zueinander angeordneten ersten Öffnungen (107) aufweist, die in fließender Verbindung mit sowohl der ersten als auch zweiten planaren Hauptoberfläche (108, 106) des zweiten Vollkörpersegments (101) stehen; das erste und zweite Vollkörpersegment (110, 101), wenn sie mit der zweiten planaren Hauptfläche (116) des ersten Vollkörpersegments (110) in unmittelbarer Nähe zu der ersten planaren Hauptfläche (108) des zweiten Vollkörpersegments (101) angeordnet sind, kooperieren, um eine Vielzahl von Düsenspalten (109) bereitzustellen, die Düsenspalten (109) durch die Kombination der Stifte (120) des ersten Vollkörpersegments (110) und der ersten Öffnungen (107) des zweiten Vollkörpersegments (101) gebildet werden, die Düsenspalten (109) einen Flüssigkeitsströmungsweg von dem Hohlraum (119) zur Aufnahme und Verteilung der aufschäumbaren Zusammensetzung zu der zweiten planaren Hauptfläche (106) des zweiten Vollkörpersegments (101) bereitstellen.

2. Düse nach Anspruch 1, die ferner mindestens zwei zweite Öffnungen aufweist, wobei die zweiten Öffnungen in dem zweiten Vollkörpersegment (101) abgegrenzt sind und in Flüssigkeitsverbindung mit beiden planaren Hauptflächen (108, 106) dieses zweiten Vollkörpersegments (101) stehen und die zweiten Öffnungen im Abstand von den ersten Öffnungen (107) angeordnet sind.

3. Düse nach Anspruch 1 oder 2, die ferner eine Vielzahl von dritten Öffnungen aufweist, wobei jede dritte Öffnung in einem Stift (120) in solch einer Art und Weise abgegrenzt ist, um in Flüssigkeitsverbindung mit sowohl dem Ende des Stifts (120), der nahe der zweiten planaren Hauptoberfläche (106) des zweiten Vollkörpersegments (101) ist, als auch einer Quelle eines flüssigen Mediums. Treibmittels oder einer anderen Komponente zu stehen.

4. Verfahren zur Herstellung eines hohlen Mehrstrangschaumstoffgegenstandes oder eines Schaumstoffgegenstandes aus hohlen koaleszierten Strängen, umfassend:
a) Bereitstellen einer aufschäumbaren Zusammensetzung, die eine Treibmittelzusammensetzung und mindestens eine filmbildende Zusammensetzung enthält, wobei die aufschäumbare Zusammensetzung sich in einem Gelzustand befindet;
b) Extrudieren der aufschäumbaren Zusammensetzung durch eine Düse (100) wie in einem der vorstehenden Ansprüche definiert, um ein hohles Extrudat aus jeder Öffnung (107) bereitzustellen;
c) Umwandeln des hohlen Extrudats in geschäumte hohle Extrudatstränge (85; 210) bei einer Temperatur, die Schaumblasenstabilität fördert, und
d) untereinander Berührenlassen der geschäumten hohlen Extrudatstränge (85; 210), während solche Stränge mindestens eine gewisse Oberflächenklebrigkeit beibehalten, um Haftung zwischen benachbarten einzelnen Strängen zu bewirken und ein hohles Mehrstrangschaumextrudat (80; 200) zu liefern.

5. Verfahren nach Anspruch 4, wobei die Treibmittelzusammensetzung mindestens ein Treibmittel, ausgewählt aus Kohlendioxid, Stickstoff, einem Distickoxid, einem Edelgas, Luft, einem Kohlenwasserstoff, einem Ether, einem niedrigeren Alkohol (1 bis 6 Kohlenstoffatome), einem teilweise halogenierten Kohlenwasserstoff, Ammoniak, Wasser und Mischungen aus zwei oder mehr solcher Treibmittel, enthält.

6. Verfahren nach Anspruch 4 oder 5, wobei die Düse auch eine Vielzahl von zweiten Öffnungen enthält, die ein festes Extrudat liefern, wobei Schritt b) eine Kombination von Vollschaumextrudaten und Hohlschaumextrudaten liefert und Schritt d) ein Mehrstrangextrudat liefert, das sowohl Vollschaumextrudatstränge (81; 205) als auch Hohlschaumextrudatstränge (85; 210) enthält.

7. Verfahren nach Anspruch 6, wobei Vollschaumextrudatstränge (81; 205) einen Teil des Mehrstrangschaumextrudats (80; 200) bilden und die Hohlschaumextrudatstränge (85; 210) einen zweiten Teil des Mehrstrangschaumextrudats (80; 200) bilden und das Vorhandensein von sowohl Hohl- als auch Vollschaumsträngen eine zelluläre geschäumte Verbundstruktur ausmacht.

8. Verfahren nach einem der Ansprüche 4 bis 7, wobei die filmbildende Zusammensetzung Polystyrol und optional Ethylen/Styrol-Interpolymer enthält und das Verfahren ferner nachfolgenden Schritt e) des Aussetzens des hohlen Mehrstrangschaumextrudats an Dampf für einen Zeitraum umfasst, der ausreichend ist, um die Schaumdichte unter die der so geschäumten Hohlextrudatstränge herabzusetzen.

9. Verfahren nach einem der Ansprüche 4 bis 8, wobei die filmbildende Zusammensetzung ein Polymer mit einer Glasübergangstemperatur nahe der Temperatur von Dampf, d.h. nominell 100°C bei Atmosphärendruck, enthält.

10. Verfahren nach einem der Ansprüche 4 bis 9, wobei die Temperatur von Schritt c) über der Glasübergangstemperatur (Tg) des Polymers oder bei denen, die ausreichend Kristallinität aufweisen, um eine Schmelztemperatur (Tm) zu haben, die nahe Tm liegt.

11. Verfahren nach einem der Ansprüche 4 bis 7, wobei die Schaumzusammensetzung mindestens ein filmbildendes Material, ausgewählt aus Olefinhomopolymeren, Olefincopolymeren, aromatischen Alkylenpolymeren und -copolymeren, Polyestern und Copolymeren, Polycarbonaten, Polyamiden, Polyimiden, halogenierten Olefinpolymeren und -copolymeren, natürlichen Polymeren, Proteinen, Polysacchariden, thermoplastischen Polyurethanen und Blends von Polystyrol und Ethylen/Styrol-Interpolymer, enthält.

12. Verfahren nach einem der Ansprüche 4 bis 7 und 11, wobei Stränge unterschiedliche polymere Zusammensetzungen aufweisen.

13. Verfahren nach einem der Ansprüche 4 bis 7 und 11, wobei der Schaum einen Gehalt an geschlossenen Zellen, wie gemäß ASTM D-2856A bestimmt, von mehr als 50 % aufweist, bezogen auf die Gesamtzahl von Zellen, ausschließlich in den Zwischenräumen liegenden Kanälen oder Lücken zwischen Schaumsträngen oder Kanälen innerhalb der hohlen Stränge, die zumindest einen Teil der Schaumstrukturen bilden.

14. Verfahren nach Anspruch 13, wobei der Schaumanteil von diesen Strängen eine mittlere Zellgröße von 25 bis 7000 µm aufweist.

15. Verfahren nach Anspruch 14, wobei diese mittlere ZellgröBe 50 bis 2000 µm beträgt.

16. Verfahren nach Anspruch 15, wobei diese mittlere Zellgröße 100 bis 1500 µm beträgt.

17. Verfahren nach einem der Ansprüche 4 bis 7 und 11, wobei der Schaum einen Gehalt an offenen Zellen, wie gemäß ASTM D-2856A bestimmt, von mehr als 50 % aufweist, bezogen auf die Gesamtzahl von Zellen, ausschließlich in den Zwischenräumen liegenden Kanälen oder Lücken zwischen Schaumsträngen oder Kanälen innerhalb der hohlen Stränge, die zumindest einen Teil der Schaumstrukturen bilden.

18. Verfahren nach Anspruch 11, wobei dieses filmbildende Material ein vernetzbarer Polyol-Isocyanat-Blend ist und die Schaumzusammensetzung ferner mindestens einen Vernetzungspromotor enthält und das Extrudat Vernetzungsbedingungen ausgesetzt wird, um eine thermohärtende Struktur zu bilden.

19. Verfahren nach Anspruch 11, wobei dieses filmbildende Material Polypropylen ist.

20. Verfahren nach einem der Ansprüche 4 bis 7 und 11, wobei jeder hohle Strang oder ausgewählte hohle Stränge aus zwei oder mehr ungleichartigen polymeren, organischen oder anorganischen Materialien bestehen.

21. Verfahren nach Anspruch 20, wobei diese Stränge durch Coextrusion hergestellt werden.

22. Verfahren nach Anspruch 20, wobei diese Stränge durch Coschäumen hergestellt werden.

23. Verfahren nach Anspruch 20, wobei diese Stränge durch Sprühen oder Beschichten von Materialien oder Dampfphasenabscheidung auf die innere Oberfläche der hohlen Stränge hergestellt werden.

24. Verfahren nach Anspruch 20, wobei diese Stränge hergestellt werden, indem die Stränge in Lösungen oder Dispersionen eingetaucht werden mit nachfolgender Beschichtung des zusätzlichen Materials auf die Strangoberfläche.

25. Verfahren nach einem der Ansprüche 4 bis 24, das ferner Anhaften der koaleszierten extrudierten Stränge an mindestens einen externen Oberflächenbereich eines Deckschichtwerkstoffs, ausgewählt aus Gipskarton, Zementkarton, Sperrholz und orientiertem Strangkarton, umfasst.

26. Verfahren nach einem der Ansprüche 4 bis 25, umfassend Herstellen zumindest teilweise aus den koaleszierten extrudierten Strängen eines Gegenstandes, ausgewählt aus Schallisolierstrukturen, Wärmeisolierstrukturen, energieabsorbierenden Strukturen, Verpackungsstrukturen, hohlraumfüllenden Strukturen, Luftverteilungsstrukturen, Filterstrukturen, Schlagenergie-Management-Strukturen, oberflächenausgleichenden Strukturen, Flüssigkeitsund Gasabsorptions- und -retentionstrukturen, objektunterstützenden Strukturen, einbettenden Strukturen, integrierten Gebäudestrukturen und geophysikalischen Strukturen.

## Revendications

1. Filière d'extrusion (100) en deux pièces pour compositions polymères expansibles, laquelle filière comporte un premier segment de corps plein (110) et un deuxième segment de corps plein (101) ; le premier segment de corps plein (110) présentant une première grande surface plane (118) et une deuxième grande surface plane (116), pratiquement parallèle à la première et à une certaine distance de celle-ci, le premier segment de corps plein (110) présentant, définie en lui, une cavité (119) de réception et de distribution de composition expansible, laquelle cavité comporte une extrémité ouverte à l'endroit où elle coupe la deuxième grande surface plane (116) et une extrémité fermée située entre la première et la deuxième grandes surfaces planes, et le premier segment de corps plein (110) présentant en outre, fixées à lui, un certain nombre de tiges (120) qui partent du niveau de l'extrémité fermée de la cavité (119) et s'étendent au-delà de l'extrémité ouverte de la cavité (119) ; le deuxième segment de corps plein (101) présentant une première grande surface plane (108) et une deuxième grande surface plane (106), pratiquement parallèle à la première et à une certaine distance de celle-ci, le deuxième segment de corps plein (101) présentant, définies en lui, un certain nombre de premières ouvertures (107), situées à une certaine distance les unes des autres, qui établissent pour un fluide une communication entre les deux grandes surfaces planes, la première (108) et la deuxième (106), du deuxième segment de corps plein (101) ; les premier et deuxième segments de corps pleins (110, 101) coopérant, lorsqu'ils sont assemblés de telle sorte que la deuxième grande surface plane (116) du premier segment de corps plein (110) soit relativement proche de la première grande surface plane (108) du deuxième segment de corps plein (101), pour former un certain nombre d'interstices de filière (109), ces interstices de filière (109) étant constitués par la combinaison des tiges (120) du premier segment de corps plein (110) et des premières ouvertures (107) du deuxième segment de corps plein (101), les interstices de filière (109) fournissant un trajet d'écoulement de fluide allant de la cavité (119) de réception et de distribution de composition expansible à la deuxième grande surface plane (106) du deuxième segment de corps plein (101).

2. Filière conforme à la revendication 1, qui présente en outre au moins deux secondes ouvertures, qui sont définies dans le deuxième segment de corps plein (101) et qui établissent pour un fluide une communication entre les deux grandes surfaces planes, la première (108) et la deuxième (106), dudit deuxième segment de corps plein (101), ces secondes ouvertures se trouvant à une certaine distance des premières ouvertures (107).

3. Filière conforme à la revendication 1 ou 2, qui comporte en outre un certain nombre de troisièmes ouvertures, dont chacune est définie dans une tige (120) de manière à établir pour un fluide une communication entre d'une part l'extrémité de la tige (120) qui se trouve relativement proche de la deuxième grande surface plane (106) du deuxième segment de corps plein (101) et d'autre part une source d'un milieu fluide, d'un agent d'expansion ou d'un autre composant.

4. Procédé de production d'un article en mousse à multiples brins creux ou à brins creux coalescés, comportant :
a) le fait de prendre une composition expansible comprenant une composition d'agent d'expansion et au moins une composition filmogène, laquelle composition expansible se trouve à l'état de gel ;
b) le fait d'extruder cette composition expansible en la faisant passer dans une filière (100), conforme à l'une des revendications précédentes, pour obtenir, par chaque ouverture (107), un extrudat creux ;
c) le fait de transformer ces extrudats creux en brins expansés (85 ; 210) d'extrudats creux, à une température qui favorise la stabilité des bulles au sein de la mousse ;
d) et le fait de laisser ces brins expansés (85 ; 210) d'extrudats creux entrer en contact les uns avec les autres, tandis que ces brins conservent au moins une certaine adhésivité de surface, pour faire adhérer les uns aux autres les brins individuels adjacents et obtenir ainsi un extrudat de mousse à multiples brins creux (80 ; 200).

5. Procédé conforme à la revendication 4, dans lequel la composition d'agent d'expansion contient au moins un agent d'expansion choisi parmi le dioxyde de carbone, l'azote, un oxyde d'azote, un gaz noble, l'air, un hydrocarbure, un éther, un alcool inférieur (dont la molécule comporte 1 à 6 atomes de carbone), un hydrocarbure partiellement halogéné, l'ammoniac, l'eau et les mélanges de deux de ces agents d'expansion ou plus.

6. Procédé conforme à la revendication 4 ou 5, dans lequel la filière comporte aussi un certain nombre de deuxièmes orifices par où sortent des extrudats pleins, grâce à quoi l'on obtient, dans l'étape (b), une combinaison d'extrudats de mousse pleins et d'extrudats de mousse creux, et dans l'étape (d), un extrudat de mousse à brins multiples qui comporte à la fois des brins d'extrudat de mousse pleins (81 ; 205) et des brins d'extrudat de mousse creux (85 ; 210).

7. Procédé conforme à la revendication 6, dans lequel les brins d'extrudat de mousse pleins (81 ; 205) forment une première partie de l'extrudat de mousse à brins multiples (80 ; 200) et les brins d'extrudat de mousse creux (85 ; 210) forment une deuxième partie de l'extrudat de mousse à brins multiples (80 ; 200), la présence des deux types de brins de mousse, les brins pleins et les brins creux, donnant une structure expansée cellulaire composite.

8. Procédé conforme à l'une des revendications 4 à 7, dans lequel la composition filmogène comprend un polystyrène et, le cas échéant, un inter-polymère d'éthylène et de styrène, et lequel procédé comprend en outre une étape ultérieure (e) qui consiste à exposer l'extrudat de mousse à multiples brins creux à l'action de la vapeur d'eau pendant un laps de temps suffisant pour que la masse volumique de la mousse diminue jusqu'à une valeur inférieure à celle des brins creux, bruts de moussage, de l'extrudat.

9. Procédé conforme à l'une des revendications 4 à 8, dans lequel la composition filmogène comprend un polymère dont la température de transition vitreuse est voisine de la température de la vapeur d'eau, soit 100 °C sous la pression atmosphérique.

10. Procédé conforme à l'une des revendications 4 à 9, dans lequel, dans l'étape (c), la température est supérieure à la température de transition vitreuse Tg du polymère, ou bien, dans le cas d'un polymère dont le taux de cristallinité est suffisamment élevé pour qu'il présente une température de fusion Tm, voisine de cette température Tm.

11. Procédé conforme à l'une des revendications 4 à 7, dans lequel la composition de mousse comprend au moins un matériau filmogène choisi parmi les homopolymères d'oléfines, les copolymères d'oléfines, les polymères et copolymères de composés alcényl-aromatiques, les polyesters homopolymères et copolymères, les polycarbonates, les polyamides, les polyimides, les polymères et copolymères d'oléfines halogénées, les polymères naturels, les protéines, les polysaccharides, les polyuréthanes thermoplastiques, et les mélanges de polystyrène et d'interpolymère d'éthylène et de styrène.

12. Procédé conforme à l'une des revendications 4 à 7 et 11, dans lequel les brins présentent des compositions en polymères différentes.

13. Procédé conforme à l'une des revendications 4 à 7 et 11, dans lequel la teneur en cellules fermées de la mousse, mesurée selon la norme ASTM D-2856A, représente plus de 50 % du nombre total de cellules, non compris les canaux ou vides interstitiels situés entre les brins de mousse, ni les canaux situés à l'intérieur des brins creux qui constituent au moins une partie des structures de mousse.

14. Procédé conforme à la revendication 13, dans lequel, dans la partie desdits brins constituée de mousse, la taille moyenne des cellules vaut de 25 à 7 000 micromètres.

15. Procédé conforme à la revendication 14, dans lequel ladite taille moyenne des cellules vaut de 50 à 2 000 micromètres.

16. Procédé conforme à la revendication 15, dans lequel ladite taille moyenne des cellules vaut de 100 à 1 500 micromètres.

17. Procédé conforme à l'une des revendications 4 à 7 et 11, dans lequel la teneur en cellules ouvertes de la mousse, mesurée selon la norme ASTM D-2856A, représente plus de 50 % du nombre total de cellules, non compris les canaux ou vides interstitiels situés entre les brins de mousse, ni les canaux situés à l'intérieur des brins creux qui constituent au moins une partie des structures de mousse.

18. Procédé conforme à la revendication 11, dans lequel ledit matériau filmogène est un mélange réticulable de polyol et d'isocyanate, la composition de mousse comprend en outre au moins un promoteur de réticulation, et l'on expose l'extrudat à des conditions de réticulation pour obtenir une structure thermodurcie.

19. Procédé conforme à la revendication 11, dans lequel ledit matériau filmogène est un polypropylène.

20. Procédé conforme à l'une des revendications 4 à 7 et 11, dans lequel tous les brins creux ou certains brins creux choisis sont constitués de deux matériaux dissemblables, polymères, organiques ou inorganiques, ou plus.

21. Procédé conforme à la revendication 20, dans lequel lesdits brins sont obtenus par coextrusion.

22. Procédé conforme à la revendication 20, dans lequel lesdits brins sont obtenus par coexpansion.

23. Procédé conforme à la revendication 20, dans lequel lesdits brins sont obtenus par pulvérisation, enduction ou dépôt à partir d'une phase vapeur de matériaux sur la surface interne des brins creux.

24. Procédé conforme à la revendication 20, dans lequel lesdits brins sont obtenus par immersion des brins dans des solutions ou des dispersions, et revêtement ultérieur de la surface des brins avec le matériau supplémentaire.

25. Procédé conforme à l'une des revendications 4 à 24, qui comporte en outre le fait de faire adhérer les brins extrudés et coalescés à au moins une partie de la surface externe d'un matériau de parement choisi parmi une plaque de plâtre, une plaque de matériau cimentaire, un panneau de contreplaqué et un panneau de grandes particules orientées.

26. Procédé conforme à l'une des revendications 4 à 25, qui comporte le fait de fabriquer, au moins en partie à partir des brins extrudés et coalescés, un article choisi parmi les structures d'isolation anti-bruit, les structures d'isolation thermique, les structures d'amortissement, les structures d'emballage, les structures de remplissage de cavités, les structures de distribution d'air, les structures filtrantes, les structures d'absorption de l'énergie des chocs, les structures de nivellement de surfaces, les structures de rétention et d'absorption de liquides ou de gaz, les structures de support d'objets, les structures d'assise, les structures de construction intégrée et les structures géophysiques.
